# EUROPÄISCHE PATENTSCHRIFT

(11) **EP 2 727 637 B1**
(45) Veröffentlichungstag und Bekanntmachung des Hinweises auf die Patenterteilung: **28.08.2019**
(21) Anmeldenummer: 12191455.0
(22) Anmeldetag: 06.11.2012
(51) Int. Cl.: B01D 11/02, C08G 69/16, C08G 69/46

(54) **EXTRAKTIONSREAKTOR SOWIE VERFAHREN ZUR EXTRAKTION VON GRANULÄREM MATERIAL**
EXTRACTION REACTOR AND METHOD FOR EXTRACTION OF GRANULAR MATERIAL
RÉACTEUR D'EXTRACTION ET PROCÉDÉ D'EXTRACTION DE MATÉRIAU GRANULEUX

(43) Veröffentlichungstag der Anmeldung: 07.05.2014
(73) Patentinhaber: Uhde Inventa-Fischer GmbH, 13509 Berlin (DE)
(72) Erfinder: SIEBECKE, Ekkehard, 10825 Berlin (DE); KATZER, Johannes, 10439 Berlin (DE); KÖNINGSMANN, Bernd, 15518 Langewahl (DE); BÄR, Mirko, 16547 Birkenwerder (DE)
(74) Vertreter: Pfenning, Meinig & Partner mbB

(56) Entgegenhaltungen:
- EP-A2- 2 077 148
- DD-A1- 206 999
- DE-A1- 19 752 182
- DE-A1- 19 801 267
- US-A- 2 248 220
- US-A- 2 578 670
- US-A- 4 002 430
- US-A- 4 160 647
- US-A1- 2002 183 478

## Beschreibung

Die vorliegende Erfindung betrifft einen Extraktionsreaktor, mit dem granuläres Material, insbesondere granuläres Polyamid extrahiert werden kann, wobei bei der Extraktion mit einer Extraktionsflüssigkeit lösliche Bestandteile aus dem granulären Material herausgelöst werden. Im Falle von Polyamid-Materialien sind dies beispielsweise oligomere oder monomere Bestandteile, die bei der Polykondenstationsreaktion zur Herstellung der Polyamid-Materialien im granulären Material verblieben sind.

Die bei der Polykondensation von Polyamid 6 (oder Polyamid 6 mit Copolymeranteil < 30%) in der Schmelze verbleibenden Oligomere (OM) und Monomere des Rohmaterials Caprolactam (und OM der Rohstoffe, die für die Herstellung von Copolymeren benötigt werden) müssen in einer nachgeschalteten Extraktions-Einheit abgetrennt werden. Der Gehalt an OM liegt meist oberhalb von 6 Masse-%. die Abtrennung wird in der Regel mittels eines 1- oder mehrstufigen Extraktionsprozesses durchgeführt. Hierbei wird das abgekühlte und zu Granulat zerkleinerte Polymer im Gegenstrom zu einer Extraktionsflüssigkeit (in der Regel Wasser mit unterschiedlich hohen Caprolactamgehalten) geführt. Dabei nimmt die Extraktionsflüssigkeit die Monomere und Oligomere (extrahierbare Stoffe) aus dem Polymergranulat auf, der Gesamtgehalt an extrahierbaren Stoffen kann im Granulat auf unter 1 Masse-% reduziert werden. Die Extraktionsflüssigkeit, die anstelle der extrahierbaren Stoffe im Polymer verbleibt, muss in einer nachfolgenden Trocknungsstufe entfernt werden. Die Strömungsführung ist in der Regel in der Art, dass das Granulat in einem Sickerbett von oben nach unten durch den Extraktionsbehälter geführt wird, wobei die Extraktionsflüssigkeit von unten nach oben geleitet wird. Eine gleichmäßige Strömung von Granulat und Extraktionsflüssigkeit soll durch Einbauten gewährleistet werden.

US 4002430 A, DE 19752182 A1, DD 206999 A1 und US 4160647 A offenbaren einen Reaktor und ein Verfahren zur Flüssigextraktion für Polyamid Granulat.

Aufgrund der unterschiedlichen Löslichkeit von Monomeren und Oligomeren in der Extraktionsflüssigkeit wird die Extraktion häufig in zwei (oder mehreren) Schritten durchgeführt. In einer ersten Stufe werden die Oligomere mit einer geeigneten Extraktionsflüssigkeit (meist Wasser mit einem Caprolactamanteil von 5 bis 50 Masse-%, bevorzugt 12 bis 25 Masse-%) abgetrennt. In einer (oder mehreren) weiteren Extraktionsstufen wird mittels einer geeigneten Extraktionsflüssigkeit (meist Wasser mit einem Caprolactamanteil von unter 0,5 Masse-%, bevorzugt unter 0,1 Masse-%) die Monomere und die restlich verbliebenen Oligomere aus dem Polymer entfernt.

Bei der Extraktion von Monomeren und Oligomeren aus Polyamid 6 (mit oder ohne Copolymeren) wird eine starke Abhängigkeit von der Extraktionstemperatur festgestellt. Grundsätzlich kann gesagt werden, dass bei erhöhten Temperaturen die Extraktionsgeschwindigkeit und -effektivität stark ansteigt. In der Praxis wird eine Extraktionstemperatur eingestellt, die gering unterhalb der atmosphärischen Siedetemperatur der Extraktionsflüssigkeit liegt.

Die maximale Extraktionstemperatur, die bei der Flüssigkeitsextraktion nicht überschritten werden sollte, wird durch die Hydrolyse des Polyamid 6 bei hohen Temperaturen in wässriger Umgebung vorgegeben. Um eine Schädigung des Polymers zu vermeiden, sollte eine Extraktionstemperatur von 140°C, bevorzugt von 130 °C, bei Verwendung von Wasser mit einem Caprolactamgehalt von bis zu 25 Masse-% als Extraktionsflüssigkeit und bei Verweilzeiten von mehr als 1h, vermieden werden.

Ein weiterer begrenzender Faktor für die Extraktionstemperatur ist die lokale Siedetemperatur innerhalb der Extraktionskolonne, die durch den hydrostatischen Druck vorgegeben wird. Diese Temperatur darf nicht überschritten werden, um negative Prozessauswirkungen zu vermeiden.

Zur weiteren Erhöhung der Extraktionstemperatur oberhalb des atmosphärischen Siedepunktes der Extraktionsflüssigkeit werden mehrere Möglichkeiten verwendet.
1. Nutzung der hydrostatischen Höhe des Extraktionsreaktors, Temperatur der Extraktionsflüssigkeit im Zulauf ist gering unterhalb der lokalen Siedetemperatur der Extraktionsflüssigkeit im Zulauf zur Extraktionskolonne, aber oberhalb der atmosphärischen Siedetemperatur am Kopf der Extraktionskolonne. Abkühlung der Extraktionsflüssigkeit durch das im Gegenstrom fließende Granulat, so dass im Ablauf die Temperatur der Extraktionsflüssigkeit jederzeit unterhalb der atmosphärischen Siedetemperatur liegt. Bei Verwendung eines Präextraktionsbehälters zur Oligomerabtrennung ist die Eintrittstemperatur des Granulates jedoch so hoch, dass kaum eine Abkühlung der Extraktionsflüssigkeit erfolgen kann. Die Effektivität ist gering, da nur eine geringe Überhitzung der eintretenden Extraktionsflüssigkeit möglich ist. Die Extraktion erfolgt in einem drucklosen Behälter.
   Durch geringere Temperatur und steigende Monomerkonzentration im oberen Teil des Extrakteurs nimmt die Dichte der Extraktionsflüssigkeit zu, Es droht die Gefahr eines Strömungsumschlages in dem die schwere Flüssigkeit aus dem oberen Teil des Extrakteurs schnell in den unteren Teil des Extrakteurs strömt. Die Strömungsverteilung des Granulates wird gestört und es ergibt sich eine ungleichmäßige Verweilzeitverteilung mit Qualitätseinbußen.
2. Nutzung der hydrostatischen Höhe des Extraktionsreaktors, Temperatur der Extraktionsflüssigkeit im Zulauf ist deutlich oberhalb der atmosphärischen Siedetemperatur der Extraktionsflüssigkeit am Kopf der Extraktionskolonne, jedoch unterhalb der lokalen Siedetemperatur. Im mittleren Bereich des Extrakteurs wird ein Teil der Extraktionsflüssigkeit abgezogen und außerhalb des Extrakteurs abgekühlt. Danach wird der Flüssigkeitsstrom oberhalb der Entnahmestelle wieder in den Extrakteur eingegeben, worauf sich eine Mischtemperatur der Extraktionsflüssigkeit ergibt, die gleich oder kleiner der lokalen Siedetemperatur der Extraktionsflüssigkeit ist (siehe z.B. US-2010/0048860A1). Hierdurch kann im unteren Teil des Extrakteurs eine maximale Extraktionstemperatur von mehr als 120 °C erreicht werden, es ergibt sich praktisch eine 2-stufige Extraktion. Die Effektivität der Extraktion ist hoch, da der untere Teil des Extrakteurs mit hoher Temperatur betrieben werden kann. Die Extraktion erfolgt in einem drucklosen Behälter.
   Durch deutlich geringere Temperatur und steigende Monomerkonzentration im oberen Teil des Extrakteurs nimmt die Dichte der Extraktionsflüssigkeit stark zu. Es ergibt sich eine klare Temperaturgrenze, die die Gefahr eines Strömungsumschlages im Vergleich zum Verfahren gemäß 1 noch deutlich vergrößert. Daraus entsteht eine Gefährdung des Betriebspersonals da überhitze Flüssigkeit an die Oberfläche strömt und dort spontan heftig siedet. Die Strömungsverteilung des Granulates wird gestört und es ergibt sich eine ungleichmäßige Verweilzeitverteilung mit Qualitätseinbußen.
3. Betrieb des Extraktionsreaktors als Druckextraktion. Das Granulat aus einer Pre-Extraktionsstufe wird mittels Pumpendruck in den Extrakteur gepumpt, dort kann aufgrund des höheren Druckes über den gesamten Verlauf der Extraktion eine höhere Temperatur eingestellt werden (siehe DE10124579A1), ohne dass es zu lokalem Sieden kommt. Hieraus ergibt sich eine sehr hohe Effektivität der Extraktion, da die Temperatur auf der gesamten Höhe des Extrakteurs angehoben werden kann. Durch die Ausführung des Extrakteurs als Druckbehälter ergeben sich höhere Aufwendungen und Kosten.
   Durch geringere Temperatur und steigende Monomerkonzentration im oberen Teil des Extrakteurs nimmt die Dichte der Extraktionsflüssigkeit zu. Es droht die Gefahr eines Strömungsumschlages in dem die schwere Flüssigkeit aus dem oberen Teil des Extrakteurs schnell in den unteren Teil des Extrakteurs strömt. Die Strömungsverteilung des Granulates wird gestört und es ergibt sich eine ungleichmäßige Verweilzeitverteilung mit Qualitätseinbußen.

Allen Varianten ist gemein, dass sie ein internes Temperaturprofil besitzen, das nur von der Eingangstemperatur von Granulat und Extraktionsflüssigkeit sowie von den Wärmeverlusten über die Oberfläche des Extraktionsreaktors abhängt. Es ist nicht möglich einen Temperaturgradienten einzustellen, der individuell, im Optimalfall auf jeder Höhe des Extrakteurs mit minimalem Abstand zur lokalen Siedetemperatur der Extraktionsflüssigkeit eingeregelt ist.

In der Regel erfolgt die Strömungsführung für Granulat und Extraktionsflüssigkeit innerhalb des Extrakteure durch den Einsatz von kegelförmigen Einbauten (siehe Skizze 2, aus: Fourne, Franz, "Synthetische Fasern", München, Wien, 1995). Dies bringt eine Abhängigkeit von Kapazität, die proportional zur horizontalen Extraktionsfläche ist, und damit zur Höhe des Extrakteurs mit sich. Das bedeutet, dass die Extrakteure bei hohen Kapazitäten (> 100 Tonnen PA/Tag) eine so große Bauhöhe bekommen, dass sie bestimmend für die Gebäudehöhe werden. Also führt die bisherige Extraktorkonstruktion mit zunehmender Kapazität direkt zu Mehrkosten bei der Gebäudetechnik.

Aufgabenstellung ist es somit, einen Extraktionsreaktor zu entwickeln, der die Möglichkeit bietet, einen individuellen Temperaturgradienten über die Höhe des Extraktionsreaktors einzustellen. Dieser soll in Abhängigkeit von der Anlagenkapazität und des gewünschten Monomer- und Oligomergehalts im Endprodukte automatisch einregelbar sein. Die maximale Temperatur im Extraktionsreaktor soll an jeder Stelle mindestens 0,5 °C (bevorzugt mindestens 2,0 °C) unterhalb der Siedetemperatur der Extraktionsflüssigkeit bei dem jeweiligen hydrostatischen Flüssigkeitsdruck liegen. Zudem soll die Möglichkeit bestehen, eine maximale Extraktionstemperatur in möglichst kurzer Verweilzeit zu erreichen, aber nicht zu überschreiten (z.B. zur Vermeidung von Produktschädigung durch Hydrolyse).

Zudem ist es Aufgabe der vorliegenden Erfindung, ein Extraktionsverfahren anzugeben, mit dem sich insbesondere auf PA6-Polymer basierendes granuläres Material auf effiziente Art und Weise extrahieren, d.h. von monomeren oder oligomeren Bestandteilen befreien lässt.

Diese Aufgabe wird bezüglich des Extraktionsreaktors mit den Merkmalen des Patentanspruchs 1, bezüglich des Extraktionsverfahrens mit den Merkmalen des Patentanspruchs 13 gelöst. Die jeweiligen abhängigen Patentansprüche stellen dabei vorteilhafte Weiterbildungen dar.

Erfindungsgemäß wird somit einen Extraktionsreaktor, der sich zur Flüssigextraktion von granulärem Material, beispielsweise Polyamide und besonders bevorzugt auf Polyamid 6 basierenden Polyamiden, eignet. Der Extraktionsreaktor gemäß der vorliegenden Erfindung umfasst dabei mindestens ein vertikal verlaufendes Strömungsrohr, das eine Mehrzahl von horizontal ausgebildeten, den Querschnitt des Strömungsrohrs vollständig oder teilweise ausfüllenden Wärmetauscherelementen enthält, die von dem granulären Material und der Extraktionsflüssigkeit durchströmt werden können, wobei die Mehrzahl der Wärmetauscherelemente das Strömungsrohr in einzelne vertikale Kompartimente unterteilt. Zudem umfasst der Extraktionsreaktor mindestens einen kopfseitigen Einlass für das granuläre Material, mindestens einen bodenseitigen Auslass für das granuläre Material, mindestens eine bodenseitige Zufuhr für Extraktionsflüssigkeit sowie mindestens einen kopfseitigen Auslass für Extraktionsflüssigkeit.

Der Extraktionsreaktor gemäß der vorliegenden Erfindung ist somit mittels eines vertikalen Strömungsrohrs für Polyamidgranulat ausgeführt. Das Granulat wird von oben nach unten in einem gefüllten Bett geführt. Im Gegenstrom wird eine Extraktionsflüssigkeit geführt. Die Extraktionsflüssigkeit wird über einen geeigneten Flüssigkeitsverteiler am unteren Ende des Extraktionsreaktors über den Querschnitt des Extraktionsreaktors verteilt. Das absinkende Granulat und die aufsteigende Flüssigkeit werden mittels Strömungseinbauten (Kassettenböden) gleichmäßig über den Durchmesser verteilt, so dass sich eine Pfropfenströmung für Flüssigkeit und Granulat einstellt.

Der erfindungsgemäße Extraktionsreaktor ermöglicht somit maximale Effizienz eines hiermit durchgeführten Extraktionsverfahrens durch optimale Volumenausnutzung.

Mit der Erfindung lassen sich folgende Vorteile realisieren:
Die Temperaturregelung der Extraktionsflüssigkeit ist über die komplette Extraktionsbetthöhe möglich.

Es kann eine Einstellung eines individuellen Temperaturgradienten mit maximaler Effizienz bei Einstellung eines Temperaturgradienten auf oder gering unterhalb der lokalen Siedetemperatur der Extraktionsflüssigkeit erfolgen.

Die Strömungsführung durch Kassettenböden, die aus Einzel-Strömungselementen bestehen, gewährleistet eine Extraktionsbetthöhe unabhängig von der Extraktionskapazität, was eine geringe Bauhöhe bei hohen Kapazitäten ermöglicht.

Die Temperatur- und Strömungsführung, verhindert eine Umkehrung der Strömung auch bei hohem Dichteunterschied zwischen Kopf und Boden des Extraktionsreaktors.

Darüber hinaus kann mit dem erfindungsgemäßen Extraktionsreaktor gewährleistet werden, dass die Strömungseinbauten in einer Weise ausgeführt werden können, dass die resultierende Höhe des Extraktionsreaktors unabhängig von der benötigten Extraktionskapazität ist.

Gemäß einer bevorzugten Ausführungsform sind im Extraktionsreaktor mindestens 2, bevorzugt mindestens 3, weiter bevorzugt 4 bis 30, insbesondere 8 bis 12 Wärmetauscherelemente vorhanden.

Eine weitere beispielhafte Ausführungsform des Extraktionsreaktors sieht vor, dass die Wärmetauscherelemente in vertikaler Richtung
a) äquidistant zueinander, und/oder
b) zueinander unterschiedlich beabstandet
angeordnet sind.

Für den Fall, dass die Wärmetauscherelemente zueinander unterschiedlich beabstandet sind, kann eine Einstellung des Abstandes in Abhängigkeit von Temperatur, Dichte und Konzentrationsgradient der Extraktionsflüssigkeit berechnet werden und die Abstände der Wärmetauscherelemente auf entsprechende Art und Weise eingestellt und realisiert werden. Gemäß einer derartigen Ausführungsform kann das Extraktionsverhalten des Extraktionsreaktors auf das jeweilige zu extrahierende Granulat im Detail abgestimmt werden. Die Wärmetauscherelemente können dabei fix im Extraktionsreaktor vorinstalliert sein, ebenso ist jedoch auch denkbar, dass die Wärmetauscherelemente in ihrer Höhe verstellt werden können, sodass die Wärmetauscherelemente für unterschiedliche Extraktionszwecke in ihrer Höhe variiert werden können. Bevorzugt ist jedoch, wenn die Wärmetauscherelemente fix vorinstalliert sind.

Beispielhafte Ausführungsformen für die zuvor genannten Wärmetauscherelemente sind dabei ausgewählt aus der Gruppe bestehend aus Kassettenböden, Einbautenböden, Rohrschlangenkonstruktionen sowie Kombinationen hieraus.

Bei mehreren Wärmetauscherelementen kann vorgesehen sein, dass diese stets aus der gleichen Gruppe ausgewählt sind, ebenso ist jedoch auch möglich, unterschiedliche Wärmetauscherelemente aus den zuvor genannten Möglichkeiten auszuwählen.

Besonders bevorzugt bei den Wärmetauscherelementen sind dabei Kassettenböden. Diese können zwischen 9 und 96, bevorzugt zwischen 33 und 61 Einzelströmungselemente umfassen, die jeweils einen separaten Raum für granuläres Material und Extraktionsflüssigkeit sowie einen verbundenen Raum für ein Medium für den Wärmetausch aufweisen.

Besonders vorteilhafte Einzelströmungselemente weisen dabei in Strömungsrichtung/vertikaler Richtung quadratischen oder hexagonalen Querschnitt und eine konischen Granulatzulauf, einen Durchtrittstunnel sowie einen konischen Granulatauslass auf.

Die Kassettenböden bestehen bevorzugt aus Einzel-Strömungselementen (quadratisch oder sechseckig) die nebeneinander zu einem kompletten Boden zusammengesetzt werden. Der Übergang zur Reaktorwand wird mittels angepassten Blechen geschlossen. Es bildet sich hierdurch ein geschlossener Heizmedium-Raum der vom Granulat/Extraktionsflüssigkeits-Raum abgetrennt ist. Der Heizmedium-Raum ist durch Stutzen von außen mit Wärmeträgermedium (bevorzugt Wasser, Wasser-Alkohol- oder Wasser-Caprolactam-Mischung) zu durchströmen. Hierdurch wirkt jeder Kassettenboden als Wärmetauscher. Die Ausführung der Kassettenböden als Kombination aus Einzel-Strömungselementen führt zu einer Unabhängigkeit der Extraktionsbetthöhe von ihrem Durchmesser. Die einzelnen Strömungselemente sind so ausgelegt, dass sie eine Vergleichmäßigung der Granulat und Flüssigkeitsströmung nur in Abhängigkeit von Dichteunterschieden, Strömungsgeschwindigkeiten, Konzentrationsunterschieden und Abstand zum nächsten Strömungselement darüber und darunter gewährleisten. Dabei ist der Durchmesser des Extraktionsreaktors nicht von Bedeutung. Bei erhöhter Extraktionskapazität, die zu einem größeren Durchmesser des Extraktionsreaktors führt, wird die Zahl der Einzel-Strömungselemente vergrößert, die Anzahl der Kassettenböden oder ihr Abstand muss nicht verändert werden, Daraus ergibt sich eine konstante Extraktionsbetthöhe auch bei erhöhter Extraktionskapazität (≥ 3500 kg/h).

Bedingung für die Ausführung der Kassettenböden ist, dass sie aus einzelnen Strömungselementen zusammengesetzt werden, die nebeneinander zu einer Gesamtkonstruktion installiert werden. Der horizontale Abstand von einem Kassettenboden zum nächsten, darüber liegenden wird berechnet in Abhängigkeit von der Dimension der Einzel-Strömungselemente und dem Dichteunterschiede von Gesamtkonstruktion zu Gesamtkonstruktion. Ein Strömungsumschlag kann dadurch sicher vermieden werden. Alternativ kann eine Rohrschlangenkonstruktion verwendet werden, die eine vergleichbare Einwirkung auf die Strömung wie der oben beschriebene Kassettenboden besitzt.

Bei größerem Durchmesser, bedingt durch eine höhere Extraktionskapazität wird die Anzahl der einzelnen Strömungselemente pro Gesamtkonstruktion geändert, nicht aber die Dimension der einzelnen Elemente. Somit bleibt die Gesamthöhe aller Strömungselemente innerhalb des Extraktionsreaktors (zylindrische Länge des Extraktionsreaktors) unabhängig von der Gesamt-Extraktionskapazität. Alternativ kann bei größerem Durchmesser des Extraktionsreaktors der Durchmesser der Rohschlangenkonstruktion vergrößert werden.

Die Anzahl der Kassettenböden variiert abhängig von der zu erreichenden Extraktionsqualität und der Länge des Extraktionsreaktors von 4 bis 30, bevorzugt 8 bis 12. Die Zahl der Einzel-Strömungselemente innerhalb eines Kassettenbodens kann zwischen 9 und 96 liegen, bevorzugt zwischen 33 und 61.

Die Zufuhr für Extraktionsflüssigkeit umfasst vorzugweise einen Flüssigkeitsverteiler, mit dem die zugeführte Extraktionsflüssigkeit über den gesamten Querschnitt des Strömungsrohrs verteilt werden kann.

Eine weitere vorteilhafte Ausführungsform des Extraktionsreaktors sieht vor, dass zumindest einige oder alle der Kompartimente einen Temperatursensor (T_{C}) zur Bestimmung der Temperatur des im jeweiligen Kompartiment vorhandenen granulären Materials und/oder der Extraktionsflüssigkeit enthalten.

Zudem ist es möglich, dass jedes Wärmetauscherelement
a) einen separaten Zulauf für ein Medium für den Wärmetausch aufweist, der ein Regelventil aufweist, über das die durch das jeweilige Wärmetauscherelement durchströmende Menge des Mediums für den Wärmetausch reguliert werden kann,
b) einen ersten separaten Zulauf für ein erstes Medium für den Wärmetausch sowie einen zweiten separaten Zulauf für ein zweites Medium für den Wärmetausch aufweist, und erstes und zweites Medium unterschiedlich temperiert sind, wobei jeweils erster und zweiter Zulauf paarweise über ein Dreiwegeventil mit jeweils einem Wärmetauschelement verbunden sind, oder
c) einen separaten Kreislauf für ein Medium für den Wärmetausch mit Zirkulationspumpe und Wärmetauscher aufweist.

Gemäß einer ersten Alternative des Anspruchs 1 können mehrere Wärmetauscherelemente gruppenweise temperiert werden. Dies erfolgt dadurch, dass mehrere Wärmetauscherelemente, bevorzugt 2 bis 6, besonders bevorzugt 2 bis 3 Wärmetauscherelemente zu Gruppen von Wärmetauscherelementen arrangiert sind, indem für jede Gruppe die Wärmetauscherelemente in Reihe nacheinander geschaltet beginnend mit dem vertikal obersten Wärmetauscherelement jeder Gruppe von einem Medium zum Wärmetausch durchströmt werden.

Auf die gleiche Art und Weise ist eine parallele Versorgung mehrerer Wärmetauscherelemente mit Wärmetauschmedium möglich.

Gemäß einer zweiten Alternative des Anspruchs 1 wird die Mehrzahl von Wärmetauscherelementen beginnend vom vertikal obersten Wärmetauscherelement in Reihe nacheinander geschaltet von einem Medium zum Wärmetausch, das bevorzugt die Extraktionsflüssigkeit ist, durchströmt, wobei nach Durchlauf des letzten Wärmetauschelements das Medium zum Wärmetausch, bevorzugt die Extraktionsflüssigkeit, über die bodenseitige Zufuhr in den Extraktionsreaktor eingeleitet wird.

Nach dem letzten Wärmetauschelement (d.h. in Extraktionsrichtung von oben nach unten das unterste im Extraktionsreaktor enthaltene Wärmetauschelement) und vor der bodenseitigen Zufuhr ist bevorzugt ein Wärmetauscher zur Temperierung des Mediums zum Wärmetausch, bevorzugt der Extraktionsflüssigkeit und/oder eine Pumpe arrangiert.

Der Wärmetauscher bzw. die Pumpe ist dabei in der Verbindungsleitung, die die einzelnen Wärmetauschelemente sukzessiv in Reihe geschaltet verbindet, enthalten bzw. hierin angeordnet.

Ebenso kann vorgesehen sein, dass bei einer derartigen Anordnung der einzelnen Wärmetauscherelemente (Reihenschaltung) nach jedem Wärmetauscherelement ein Wärmetauscher zur Temperierung des Mediums zum Wärmetausch, bevorzugt der Extraktionsflüssigkeit, vorhanden ist.

Der Extraktionsreaktor kann unter Umgebungsdruck oder unter Überdruck betrieben werden (1,0 bar absolut bis 3,0 bar absolut, bevorzugt 1,0 bar absolut bis 2,0 bar absolut).

Die Strömungsführung des Wärmeträgermediums durch die Kassettenböden kann auf drei Varianten erfolgen (Option 1, 2, 3, Beispiele mit jeweils 4 Regelkreisen)):
Option 1: Durchströmung mit konstanter Wärmeträgermediumsstemperatur pro Kassettenboden oder Kassettenbodengruppe: Jeder einzelne Kassettenboden (oder Gruppen von bis zu 6 Kassettenböden) ist mit einer separaten Temperaturregelung versehen. Hierbei wird in Abhängigkeit von der Extrakt-Mediumstemperatur in den einzelnen Kompartimenten oberhalb der Kassettenböden die Strömungsmenge des einzelnen Wärmeträgermediums so eingeregelt, dass die Extrakt-Mediumstemperatur den gewünschten Wert erreicht. Die Temperatur des Wärmeträgermediums bleibt dabei im Zulauf konstant.
Option 2: Durchströmung mit konstanter Wärmeträgermediumsmenge: Jeder einzelne Kassettenboden (oder Gruppen von bis zu 6 Kassettenböden) ist mit einer separaten Temperaturregelung versehen. Hierbei wird in Abhängigkeit von der Extrakt-Mediumstemperatur oberhalb der Kassettenböden die Temperatur des einzelnen Wärmeträgermediumstroms so eingeregelt, dass die Extrakt-Mediumstemperatur in den einzelnen Kompartimenten den gewünschten Wert erreicht. Hierbei wird entweder ein 3-Wege-Mischventil verwendet, dass über den kompletten Regelbereich einen konstanten Durchfluss hat (siehe Figuren), oder ein mit Pumpe angetriebener Wärmeträgermediums-Kreislauf über den Kassettenboden mit konstanter Überströmmenge und Wärmetauscher zur Temperatureinstellung.
Option 3: Wärmeträgermediumsführung im Gegenstrom mit proportionaler Durchflussmenge: Die Extraktionsflüssigkeit wird als Wärmeträgermedium genutzt und zuerst im Gegenstrom zum Extraktionsflüssigkeit und im Gleichstrom mit dem Polyamid-Granulat in Reihe durch die einzelnen Kassettenböden [B] geführt. Zur Einstellung des Temperaturprofils kann das Wärmträgermedium zwischen den einzelnen Kassettenböden durch Wärmetauscher [C] aufgeheizt oder gekühlt werden. Nach dem Austritt aus dem untersten Kassettenboden wird das Wärmeträgermedium in einem Wärmetauscher [E] auf Extraktionstemperatur gebracht und falls notwendig mit Pumpendruck [D] als Extraktionsflüssigkeit in den Extraktionsreaktor [A] geleitet. Da die Extraktionsflüssigkeitsmenge proportional zu der eingespeisten Granulatmenge eingeregelt wird, bleibt auch die Menge des Wärmeträgermediums proportional zur Granulatmenge. Hierdurch bleibt das Temperaturprofil über den kompletten Kapazitätsbereich konstant.

Es sind auch Mischversionen der 3 Optionen möglich. Die Kassettenböden [B] können zu Gruppen zusammengefasst werden, so dass für eine Gruppe von 2 bis 6, bevorzugt 2 bis 3 Kassettenböden ein Temperaturregelkreis gebildet wird. Das Wärmeträgermedium wird in Reihe durch die zusammengehörigen Kassettenböden geführt.

Die vorliegende Erfindung betrifft ebenso ein Verfahren zur Extraktion von in einer Extraktionsflüssigkeit löslichen monomeren oder oligomeren Bestandteilen, bevorzugt ε-Caprolactam oder oligomeres Polyamid 6, aus einem granulärem Material, bevorzugt Polyamid 6-Granulat oder einem Granulat aus Copolymeren von Polyamid 6 mit einem zuvor beschriebenen erfindungsgemäßen Extraktionsreaktor bei dem granuläres Material über den mindestens einen kopfseitigen Einlass in das vertikal verlaufende Strömungsrohr eingespeist und vertikal nach unten in Richtung des mindestens einen bodenseitigen Auslasses geführt und dort dem Extraktionsreaktor entnommen wird, wobei eine Extraktionsflüssigkeit über die mindestens eine bodenseitige Zufuhr in das vertikal verlaufende Strömungsrohr eingespeist und im Gegenstrom zum granulären Material in Richtung des mindestens einen kopfseitigen Auslasses geführt und dort entnommen wird, wobei über die Mehrzahl der Wärmetauscherelemente ein vertikaler Temperaturgradient im Strömungsrohr erzeugt wird.

Das erfindungsgemäße Extraktionsverfahren wird somit mittels eines vertikalen Strömungsrohrs für Polyamidgranulat ausgeführt. Das Granulat wird von oben nach unten in einem gefüllten Bett geführt. Hierbei wird im Gegenstrom zum Granulatstrom eine geeignete Extraktionsflüssigkeit geführt, die Monomere und Oligomere aus dem Granulat aufnimmt (Extraktion) und mit sich aus dem Reaktor trägt. Die erreichbare Extraktionsqualität hängt hauptsächlich von den Betriebsparametern Temperatur, Konzentration in der Extraktionsflüssigkeit, Überströmgeschwindigkeit und der Verweilzeit ab.

Insbesondere wird bei einer derartigen Verfahrensführung vorgesehen, dass über die Mehrzahl der Wärmetauscherelemente in vertikaler Richtung von oben nach unten zunehmende Temperaturen im Strömungsrohr eingestellt werden.

Bevorzugt wird der Temperaturgradient so eingestellt, dass die maximale Temperatur der Extraktionsflüssigkeit innerhalb des Strömungsrohres an jeder Stelle mindestens 0,5 °C bis 10 °C, bevorzugt 2 °C bis 7 °C unterhalb des Siedepunktes der Extraktionsflüssigkeit beim gegebenen hydrostatischen Druck liegt. Zusätzlich kann die Temperaturführung so gestaltet werden, dass eine vorgegebene Maximaltemperatur schnell erreicht, aber nie überschritten wird (zu Vermeidung von Materialschädigung durch Hydrolyse).

Der innerhalb des Strömungsrohres vorherrschende Druck wird vorzugweise zwischen 1,0 und 3,0 bar absolut, bevorzugt 1,0 und 2,0 bar absolut eingestellt.

Ein entsprechender Druck kann beispielsweise im Gasraum im Kopf des Extraktionsreaktors gemessen werden. Die zuvor angegebenen Drücke bezeichnen dabei den Absolutdruck gegenüber absolutem Vakuum.

Das Verfahren kann insbesondere auf die nachfolgend genannten drei Varianten geführt werden, bei denen jedes Wärmetauscherelement
a) einen separaten Zulauf für ein Medium für den Wärmetausch aufweist, der ein Regelventil aufweist, über das die durch das jeweilige Wärmetauscherelement durchströmende Menge des Mediums für den Wärmetausch reguliert werden kann, wobei jedes Wärmetauscherelement mit einem gleich temperierten Medium für den Wärmetausch durchströmt wird und die Menge des Mediums pro Wärmetauscherelement oder Gruppe von Wärmetauscherelementen variiert wird,
b) einen ersten separaten Zulauf für ein erstes Medium für den Wärmetausch sowie einen zweiten separaten Zulauf für ein zweites Medium für den Wärmetausch aufweist, wobei erstes und zweites Medium unterschiedlich temperiert sind, wobei jeweils erster und zweiter Zulauf paarweise über ein Dreiwegeventil mit jeweils einem Wärmetauschelement verbunden sind, wobei durch unterschiedliche Mischungsverhältnisse aus erstem und zweiten Medium für jedes Wärmetauscherelement oder Gruppe von Wärmetauscherelementen eine definierte Temperatur eingestellt wird, oder
c) einen separaten Kreislauf für ein Medium für den Wärmetausch mit Zirkulationspumpe und Wärmetauscher aufweist, wobei Temperatur und/oder Menge des Mediums für jedes Wärmetauscherelement oder Gruppe von Wärmetauscherelementen separat eingestellt wird.

Der Temperaturgradient kann insbesondere dadurch eingestellt werden, dass die Mehrzahl von Wärmetauscherelementen beginnend vom vertikal obersten Wärmetauscherelement in Reihe nacheinander geschaltet von einem Medium zum Wärmetausch, das bevorzugt die Extraktionsflüssigkeit ist, durchströmt wird, wobei nach Durchlauf des letzten Wärmetauschelements das Medium zum Wärmetausch, bevorzugt die Extraktionsflüssigkeit, über die bodenseitige Zufuhr in den Extraktionsreaktor eingeleitet wird und vor Einleiten mittels eines Wärmetauschers auf eine vorbestimmte, an der bodenseitigen Zufuhr herrschende Extraktionstemperatur erwärmt wird.

Die Einstellung der Temperatur in dem im Gegenstrom betriebenen Strömungsrohr erfolgt durch mehrere (4 bis 30, bevorzugt 8 bis 12) Einbautenböden (z.B. Kassettenböden), die als Wärmetauscher wirken. Hierdurch kann die Flüssigkeitstemperatur und damit auch die Granulattemperatur kleinschrittig eingestellt werden, so dass ein nahezu homogener Temperaturgradient über die Länge des Extraktionsreaktors eingestellt werden kann.
Alternativ kann ein eine Rohrschlangenkonstruktion verwendet werden, die mit einem Wärmeträgermedium durchströmt wird und als Wärmetauscher wirkt.

Die Kühlung bzw. Aufheizung des Extraktionsflüssigkeits-Stroms erfolgt überein flüssiges Wärmeträgermedium (bevorzugt Wasser), das auf der Innenseite die Kassettenböden durchströmt.

Durch den kleinschrittigen Temperaturgradienten stellen sich über die Strömungseinbauten nur kleine Temperaturunterschiede ein, die einen geringen Dichteunterschied über die Strömungseinbauten mit sich bringen. Entsprechend ist die Triebkraft die ein Umschlagen der Strömung hervorrufen könnte gering.

Die Kassettenböden können zu Gruppen zusammengefasst werden, so dass für eine Gruppe von 2 bis 6, bevorzugt 2 bis 3 Kassettenböden ein Temperaturregelkreis gebildet wird. Das Wärmeträgermedium wird in Reihe durch die zusammengehörigen Kassettenböden geführt. Die Führung des Wärmeträgermediums durch den Extraktionsreaktor kann auf 3 unterschiedliche Varianten erfolgen (siehe Option1, 2, 3, Beispiele mit jeweils 4 Temperaturregelkreisen).

### Option 1: Regelung über konstante Temperatur:

Jeder einzelne Kassettenboden (oder Gruppen von bis zu 6 Kassettenböden) ist mit einer separaten Temperaturregelung versehen. Hierbei wird in Abhängigkeit von der Extrakt-Mediumstemperatur oberhalb der Kassettenböden die Strömungsmenge der einzelnen Wärmeträgermediumströme so eingeregelt, dass die Extrakt-Mediumstemperatur den gewünschten Wert erreicht. Die Anzahl der Regelkreise liegt zwischen 2 und der Gesamt-Kassettenbodenzahl, bevorzugt zwischen 4 und 6.

Die Temperatur der Wärmeträgermedien (12, 13, 14, 15) liegt unterhalb der jeweiligen Extraktionstemperatur (2, 3, 4, 5). Die Temperatur im Granulat-Ausgangs-Bereich des Extraktionsreaktors (1) wird durch die Temperatur der Extraktionsflüssigkeit (11) eingestellt. Die Ausgangstemperatur der Extraktionsflüssigkeit (16) entspricht einer Mischtemperatur aus oberster geregelter Extraktionstemperatur (5) und der Granulat-Eingangstemperatur (6).

### Option 2: Regelung über konstante Durchflussmenge:

Jeder einzelne Kassettenboden (oder Gruppen von bis zu 6 Kassettenböden) ist mit einer separaten Temperaturregelung versehen. Hierbei wird in Abhängigkeit von der Extrakt-Mediumstemperatur oberhalb der Kassettenböden die Temperatur der einzelnen Wärmeträgermediumsströme so eingeregelt, dass die Extrakt-Mediumstemperatur den gewünschten Wert erreicht. Die Anzahl der Regelkreise liegt zwischen 2 und der Gesamt-Kassettenbodenzahl, bevorzugt zwischen 4 und 6.

Bei Verwendung von Mischventilen zur Temperatureinstellung (Beispiel, Option 2), bei der die Wärmeträgermediumstemperatur aus einem Heizmedium und einem Kühlmedium gemischt wird, liegt die Temperatur der Heizmedien oberhalb der jeweiligen Extraktionstemperatur in dem jeweiligen Kompartiment. Die Temperatur der Kühlmedien liegt unterhalb der jeweiligen Extraktionstemperatur in dem jeweiligen Kompartiment. Die Temperatur im Granulat-Ausgangs-Bereich des Extraktionsreaktors wird durch die Temperatur der Extraktionsflüssigkeit eingestellt. Die Ausgangstemperatur der Extraktionsflüssigkeit entspricht einer Mischtemperatur aus oberster geregelter Extraktionstemperatur und der Granulat-Eingangstemperatur.

### Option 3: Wärmeträgermedium im Gegenstrom mit proportionaler Durchflussmenge:

Die Extraktionsflüssigkeit wird als Wärmeträgermedium genutzt und im Gegenstrom zum Extraktionsflüssigkeit und im Gleichstrom mit dem Polyamid-Granulat in Reihe durch die einzelnen Kassettenböden geführt. Zur Einstellung des Temperaturprofils kann das Wärmträgermedium zwischen den einzelnen Kassettenböden durch Wärmetauscher aufgeheizt oder gekühlt werden. Dies geschieht in Abhängigkeit von der Extrakt-Mediumstemperatur oberhalb des Kassettenbodens. Nach dem Austritt aus dem untersten Kassettenboden wird das Wärmeträgermedium in einem Wärmetauscher auf Extraktionstemperatur gebracht und falls notwendig mit Pumpendruck als Extraktionsflüssigkeit in den Extraktionsreaktor geleitet. Da die Extraktionsflüssigkeitsmenge proportional zu der eingespeisten Granulatmenge eingeregelt wird, bleibt auch die Menge des Wärmeträgermediums proportional zur Granulatmenge. Hierdurch bleibt das Temperaturprofil über den kompletten Kapazitätsbereich konstant.

Die Extraktionstemperatur (2, 3, 4, 5) wird jeweils als Mischtemperatur aus der Granulattemperatur des von oben eintretenden Granulates und der Extraktionsflüssigkeitstemperatur, die durch das aufgeheizte oder gekühlte Wärmeträgermedium temperiert von unten in den Raum eintritt, gebildet. Die Temperatur im Granulat-Ausgangs-Bereich des Extraktionsreaktors (1) wird durch die Temperatur der aufgeheizten Extraktionsflüssigkeit (21) eingestellt. Die Ausgangstemperatur der Extraktionsflüssigkeit (16) entspricht einer Mischtemperatur aus oberster geregelter Extraktionstemperatur (5) und der Granulat-Eingangstemperatur (6).

Insbesondere wird
a) als Extraktionsflüssigkeit Wasser oder eine Mischung aus Wasser und ε-Caprolactam und/oder
b) als Medium für den Wärmetausch Wasser, eine Mischung aus Wasser und einem mit Wasser mischbaren Alkohol oder eine Mischung aus Wasser und ε-Caprolactam
eingesetzt.

Die vorliegende Erfindung wird anhand der nachfolgenden Ausführungsformen sowie den beigefügten Figuren näher erläutert, ohne die Erfindung jedoch auf die dargestellten Parameter zu beschränken.

Dabei zeigen:
Fig. 1 eine erste Ausführungsform eines erfindungsgemäßen Extraktionsreaktors
Fig. 2 eine zweite Ausführungsform eines erfindungsgemäßen Extraktionsreaktors
Fig. 3 eine dritte Ausführungsform eines erfindungsgemäßen Extraktionsreaktors
Fig. 4 einen Kassettenboden, der in einem erfindungsgemäßen Extraktionsreaktor eingesetzt werden kann in Aufsicht
Fig. 5 einen Querschnitt durch einzelne Strömungselemente eines in Figur 4 dargestellten Kassettenbodens, sowie
Fig. 6 einen Temperaturgradienten, der mit einem erfindungsgemäßen Extraktionsreaktor über die Gesamthöhe realisierbar ist.

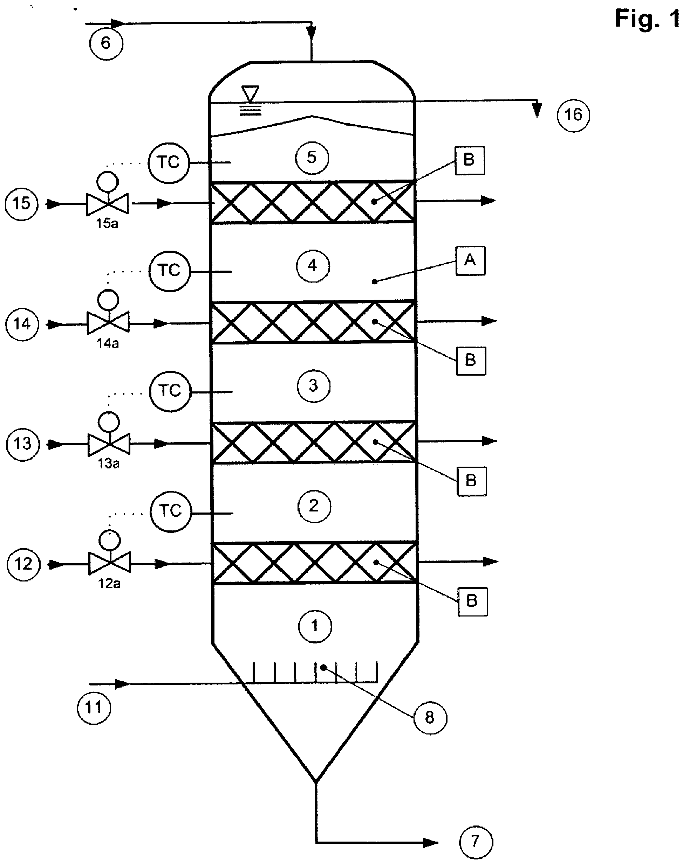

Figur 1 zeigt eine erste Ausführungsform eines erfindungsgemäßen Extraktionsreaktors. Der Extraktionsreaktor umfasst dabei ein vertikal angeordnetes Strömungsrohr A, in dem in vertikaler Richtung verlaufend mehrere, im Beispiel der Figur 1 insgesamt vier Wärmetauschelemente B eingefügt sind. Die Wärmetauschelemente füllen dabei den kompletten Querschnitt des Strömungsrohres A aus. In Figur 1 sind die Wärmetauschelemente B äquidistant angeordnet. Durch die Wärmetauschelemente B wird das Strömungsrohr A in einzelne Kompartimente 1, 2, 3, 4, 5 unterteilt. Der Extraktionsreaktor verfügt über einen kopfseitigen Einlass 6, über den dem Extraktionsreaktor granuläres Material, beispielsweise PA6 Granulat, zugeführt werden kann. Das kopfseitig zugeführte granuläre Material durchläuft den Extraktionsreaktor von oben nach unten, wird dabei im Extraktionsreaktor extrahiert und verlässt den Extraktionsreaktor am bodenseitigen Auslass 7. Zudem fügt der Extraktionsreaktor über einen bodenseitig angeordneten Einlass 8 für Extraktionsflüssigkeit 11, wobei der bodenseitige Einlass 8 nach dem letzten Wärmetauschelement, d.h. als unterstes Element im Extraktionsreaktor angeordnet ist. Über den Zulauf 8 für Extraktionsflüssigkeit 11 kann bodenseitig Extraktionsflüssigkeit 11 in den Extraktionsreaktor eingespeist werden. Die Extraktionsflüssigkeit durchströmt den Extraktionsreaktor dabei von unten nach oben und wird über einen kopfseitig angeordneten Ablauf bzw. Auslass 16 dem Extraktionsreaktor wieder entnommen. Somit kann mit einem erfindungsgemäßen Extraktionsreaktor eine Extraktion im Gegenstrom erfolgen.

Gemäß der Ausführungsform nach Figur 1 ist nunmehr vorgesehen, dass jedes Wärmetauschelement B über einen separaten Zulauf 12, 13, 14, 15 mit einem wärmetauschenden Medium durchströmt werden kann. Jedes Wärmetauscherelement B verfügt ebenso über einen separaten Ablauf für ein entsprechendes wärmetauschendes Fluid. Die Regulierung der Menge des durch ein jeweiliges Wärmetauscherelement B durchgeströmendes wärmetauschendes Medium kann dabei für jeden Zulauf 12, 13, 14, 15 mittels eines separaten Ventil 12a, 13a, 14a, 15a gesteuert werden. Jedes Ventil kann beispielsweise auch über einen Temperatursensor TC gesteuert werden, sodass in jedem Kompartiment 2, 3, 4, 5 beispielsweise vordefinierte Temperaturen eingestellt werden können und durch die Regulierung des Durchflusses bzw. der Temperatur eines durch ein jeweiliges Wärmetauscherelement B durchströmendes wärmetauschende Fluid die vordefinierte Temperatur in den Kompartiment eingestellt werden kann.

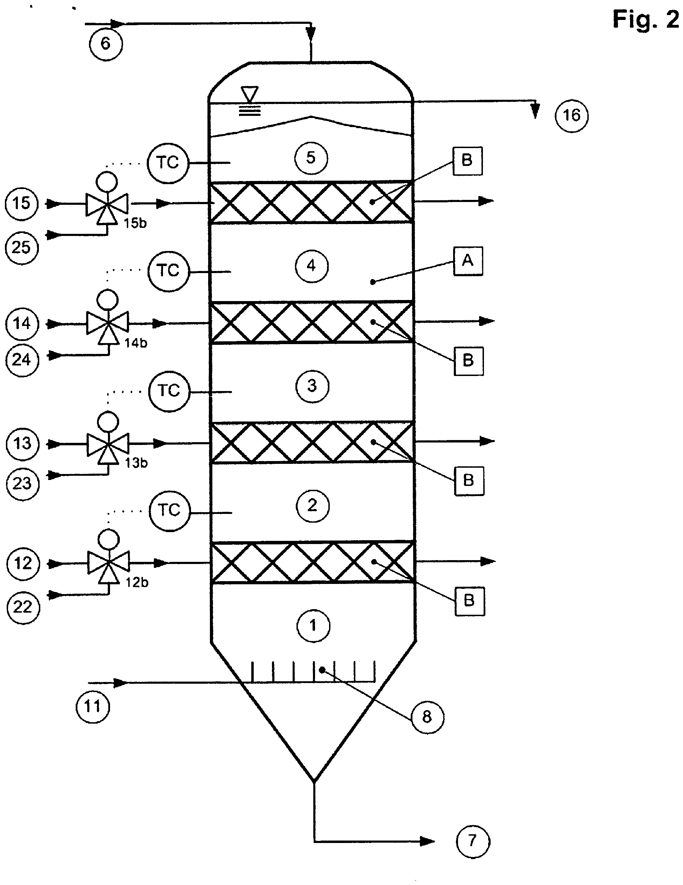

Figur 2 zeigt eine weitere Ausführungsform eines erfindungsgemäßen Extraktionsreaktors. Dabei sind gleiche Elemente mit dem gleichen Bezugszeichen wie auch schon in Fig. 1 verwendet, beschrieben. Im Unterschied zur Ausführungsform gemäß Fig. 1 unterscheidet sich der Extraktionsreaktor gemäß Fig. 2 in einer anderen Ansteuerung bzw. Versorgung der Wärmetauscherelemente B mit wärmetauschenden Medien. Jedes Wärmetauschelement B verfügt dabei über zwei separate Zuläufe 12 und 22, 13 und 23, 14 und 24 bzw. 15 und 25, mit denen dem jeweiligen Wärmetauscherelement B jeweils zwei unterschiedliche Medien für den Wärmetausch zugeführt werden können. Beispielsweise kann vorgesehen sein, dass die Temperatur des ersten Mediums, 12, 13, 14, 15 höher ist als die Temperatur des zweiten Mediums 22, 23, 24, 25. Über das jeweilige Mischungsverhältnis der beiden über die jeweiligen Zuläufe 12 und 22, 13 und 23, 14 und 24, 15 und 25 zugeführten ersten und zweiten Medien, das über ein entsprechendes Dreiwegeventil bzw. Mischungsventil 12b, 13b, 14b, 15b eingestellt werden kann, können die jeweiligen Wärmetauscherelemente B unterschiedlich temperiert werden. Die Gesamtmenge an Medien, die dabei jeweils durch die Wärmetauscherelemente B durchgeführt wird, kann dabei konstant gehalten, aber auch variiert werden.

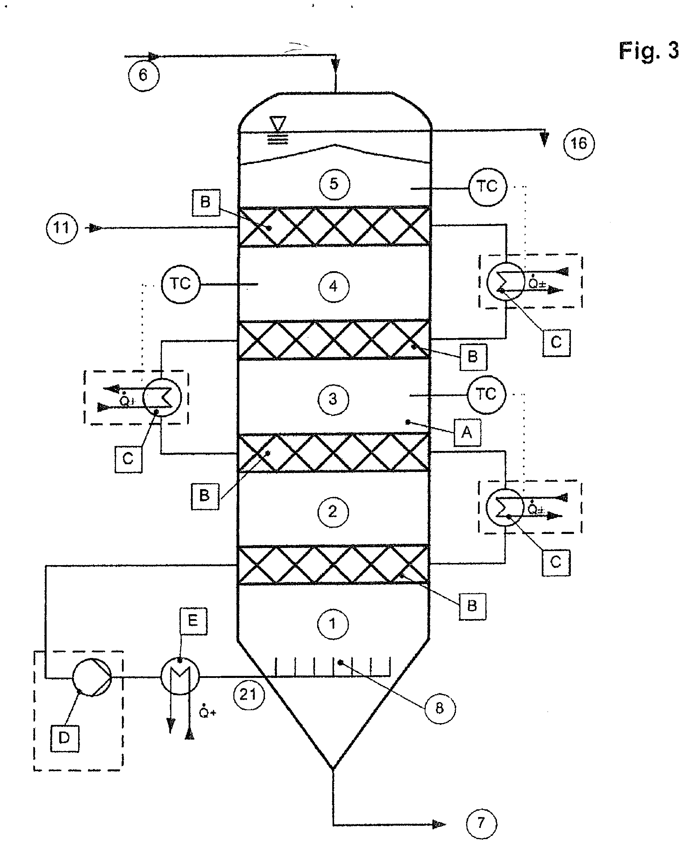

Figur 3 zeigt eine weitere Ausführungsform eines erfindungsgemäßen Extraktionsreaktors gemäß der vorliegenden Erfindung. Auch hier bezeichnen gleiche Bezugszeichen die gleichen Elemente wie bereits in den vorhergehenden Figuren beschrieben. Auch die Ausführungsform gemäß Figur 3 unterscheidet sich von den vorhergehenden Ausführungsformen durch eine unterschiedliche Versorgung der jeweiligen Wärmetauscherelemente B mit wärmetauschenden Medien. Im Beispielsfalls der Fig. 3 durchströmt das wärmetauschende Medium dabei in Reihe die einzelnen Wärmetauscherelemente B, beginnend mit dem obersten Wärmetauscherelement. Nach Durchlauf des letzten Wärmetauscherelements B wird das Wärmetausch-Medium dabei über den bodenseitigen Einlass 8 dem Extraktionsreaktor zugeführt. Gemäß dieser Ausführungsform ist somit das verwendete Wärmetausch-Medium die Extraktionsflüssigkeit 11. Nach Durchlauf des ersten, obersten angeordneten Wärmetauscherelements B wird das wärmetauschende Medium bzw. die Extraktionsflüssigkeit 11 über eine separate Rohrleitung dem zweiten Wärmetauscherelement B zugeführt. In dieser Rohrleitung, d.h. zwischen dem ersten und dem zweiten Wärmetauscherelement B kann dabei ein Wärmetauscher C angeordnet sein, mit dem eine Temperierung des wärmetauschenden Mediums bzw. der Extraktionsflüssigkeit 11 erfolgen kann. Zusätzlich verfügt der Extraktionsreaktor gemäß Fig. 3 eine Pumpe D, die im Flüssigkeitslauf des wärmetauschenden Mediums bzw. der Extraktionsflüssigkeit 11 angeordnet ist. Der Pumpe D ist ebenso ein weiterer Wärmetauscher E nachgeschaltet.

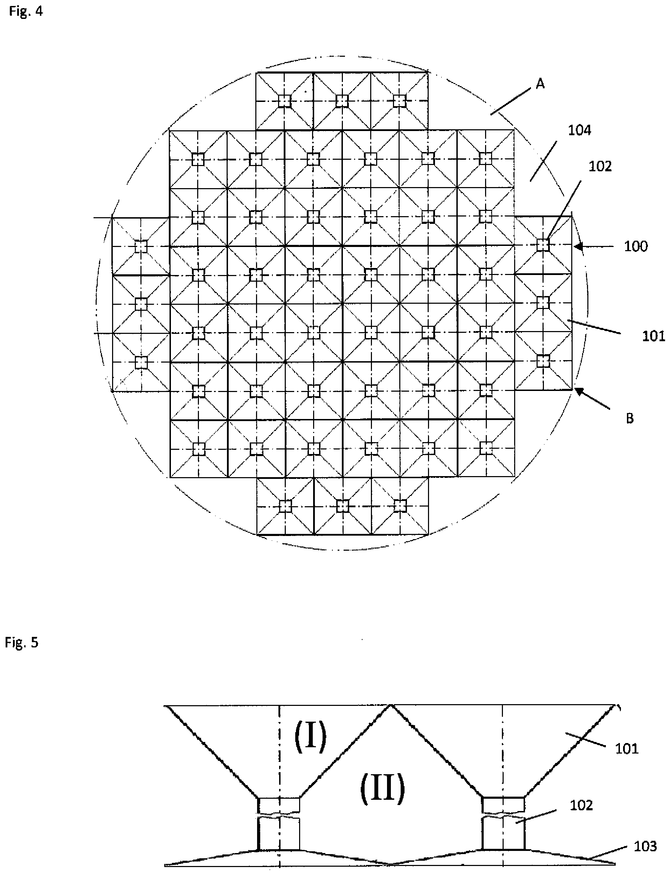

Fig. 4 und 5 zeigen einen Kassettenboden, der als Wärmetauscherelement B in einem Extraktionsreaktor, wie beispielsweise in den Figuren 1 bis 3 dargestellt, verwendet werden kann. In Fig. 4 ist eine Aufsicht von oben auf einen entsprechenden Kassettenboden dargestellt, während in Figur 5 ein Querschnitt durch zwei Einzelströmungselemente abgebildet ist. In Figur 4 ist eine Ausführungsform dargestellt, in der ein entsprechender Kassettenboden querschnittfüllend in ein Strömungsrohr A eingebracht ist. Der Kassettenboden B umfasst dabei eine Mehrzahl von aneinander gefügten Einzelströmungselementen 100, im Beispielsfall der Figur 4 48 Stück, die die gesamte Fläche des Strömungsrohres ausfüllen. Die nicht von Strömungselementen 100 ausgefüllten Bereiche 104 können dabei durch ein durchgehendes Blech verschlossen sein, sodass jede durch das Rohr strömende Flüssigkeit bzw. Granulat zwangsläufig durch ein Einzelströmungselement 100 eines entsprechenden Kassettenbodens B durchgeführt werden muss. Jedes Einzelströmungselement weist dabei einen Konus 101 auf, über den in Strömungsrichtung von oben nach unten eine Einströmung in ein Einzelströmungselement 100 stattfindet. Der Konus 101 mündet in einen Durchtrittstunnel 102, dieser wiederum mündet in einen ebenfalls konischen Auslass 103. In der beispielhaften Ausführungsform gemäß Fig. 4 weisen sämtliche Einzelströmungselemente 100 eine quadratische Aufsicht auf (siehe Figur 4), ebenso ist jedoch eine andere Geometrie der Einzelströmungselemente 100 denkbar, beispielsweise eine hexagonale Geometrie.

Durch die Verjüngung des Konus 101 in den Durchtrittstunnel 102 entsteht zwischen der Eintritts- und der Austrittsfläche der Einzelströmungselemente ein Raum I, durch den beispielsweise das Granulat bzw. die Extraktionsflüssigkeit geführt wird, sowie einen Zwischenraum II, durch den ein temperierendes Medium geführt werden kann. Über den Heizmedium-Raum II kann somit eine Temperierung des Kassettenbodens erfolgen.

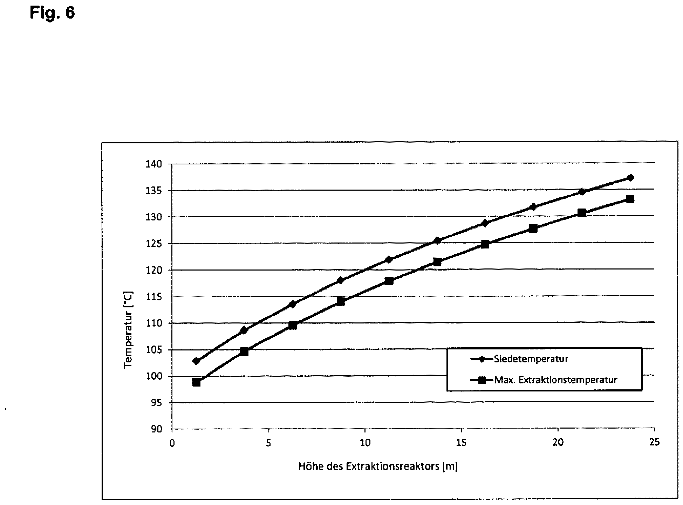

Figur 6 zeigt einen Temperaturgradienten, der mit einem erfindungsgemäßen Extraktionsreaktor erzielt werden kann. Ein derartiger Extraktionsreaktor weist dabei 10 Wärmetauscherelemente B auf, über die jeweils eine Temperierung der Extraktionsflüssigkeit erreicht werden kann. Auf der Abszisse ist die Höhe des Extraktionsreaktors in Metern angegeben, dabei wird die Höhe von oben nach unten gemessen. Auf der Ordinate ist die theoretische Siedetemperatur des verwendeten Extraktionsmediums angegeben (obere Messkurve), die wie dargestellt mit dem hydrostatischen Druck des Extraktionsmediums mit zunehmender Höhe nach unten steigt. Die untere Kurve bezeichnet dabei die tatsächlich eingestellte Extraktionstemperatur des Extraktionsmediums, das über die jeweiligen Wärmetauscherelemente B temperiert wird.

### Beispiel 1

Einsatz einer Extraktionskolonne gemäß Pos. 10, bei dem die Extraktionsflüssigkeit durch alle Kassetten der Extraktionskolonne im Gleichstrom mit dem Granulat von oben nach unten geführt wird (Kassettenstrom). Nach dem Austritt der Extraktionsflüssigkeit wird diese durch einen Wärmetauscher auf Eintrittstemperatur aufgeheizt. Die Förderung der Extraktionsflüssigkeit geschieht durch eine Kreiselpumpe.

Alternativ kann die Extraktionsflüssigkeit direkt in den Extraktionshauptraum geführt werden, ohne vorher durch die Kassettenböden geführt zu werden. Die Kassettenböden üben dadurch keinen kühlenden oder heizenden Einfluss aus. Die Extraktionskolonne besitzt 6 Kassettenböden. Zwischen Kassette 3 und 4 (gezählt von unten) kann der Kassettenstrom mittels eines Rohrbündelwärmetauschers durch Heizdampf aufgeheizt werden. Temperaturmessungen sind unterhalb des untersten Kassettenbodens und oberhalb jeden Kassettenbodens installiert.

### Installation:

Extraktordurchmesser: 600mm
Anzahl Kassettenböden: 6 Stück
Anzahl Kassettenelemenete pro Kassettenboden: 4 Stück
Abstand der Kassettenböden: Äquidistant
Granulatstrom: 60 kg/h
Extraktionsflüssigkeitsstrom: 65 kg/h
Verweilzeit Granulat im Extraktor: ∼13h
Extraktgehalt im Granulat vor Extraktion: 9,2 %
Extraktgehalt der Extraktionsflüssigkeit vor Extraktion: ∼0,0 %
Temperatur Granulat im Zulauf: 95 °C

| | **Betrieb ohne Kassettenstrom** | **Betrieb mit Kassettenstrom Ohne Zwischenerhitzung** | **Betrieb mit Kassettenstrom Mit Zwischenerhitzung** |
|---|---|---|---|
| Zulauf Extraktionsflüssigkeit Kassettenböden | - | 99,5 °C | 99,5 °C |
| Ablauf Extraktionsflüssigkeit | 98 °C | 97,5 °C | 98 °C |
| Temperatur oberhalb Kassette 6 | 98 °C | 97 °C | 98 °C |
| Temperatur oberhalb Kassette 5 | 99 °C | 98 °C | 99 °C |
| Temperatur oberhalb Kassette 4 | 100 °C | 99 °C | 101 °C |
| Temperatur oberhalb Kassette 3 | 100 °C | 100 °C | 104,5 °C |
| Temperatur oberhalb Kassette 2 | 101 °C | 101 °C | 106 °C |
| Temperatur oberhalb Kassette 1 | 102 °C | 103 °C | 107 °C |
| Zulauf Extraktionsflüssigkeit Hauptextrakteur | 102 °C | 111 °C | 111 °C |
| Temperatur Granulatablauf | 102 °C | 108 °C | 110 °C |
| **Extraktgehalt Granulat nach Extraktion** | **0,8%** | **0,6%** | **0,3%** |

### Beispiel 2

Einsatz einer Extraktionskolonne gemäß Pos. 10, bei dem die Extraktionsflüssigkeit durch alle Kassetten der Extraktionskolonne im Gleichstrom mit dem Granulat von oben nach unten geführt wird (Kassettenstrom). Nach dem Austritt der Extraktionsflüssigkeit wird diese durch einen Wärmetauscher auf Eintrittstemperatur aufgeheizt. Die Förderung der Extraktionsflüssigkeit geschieht durch eine Kreiselpumpe.

Alternativ kann die Extraktionsflüssigkeit direkt in den Extraktionshauptraum geführt werden, ohne vorher durch die Kassettenböden geführt zu werden. Die Kassettenböden üben dadurch keinen kühlenden oder heizenden Einfluss aus. Die Extraktionskolonne besitzt 9 Kassettenböden. Zwischen Kassette 3 und 4, sowie 6 und 7 (gezählt von unten) kann der Kassettenstrom mittels Rohrbündelwärmetauschern durch Heizdampf aufgeheizt werden. Temperaturmessungen sind unterhalb des untersten Kassettenbodens und oberhalb jeden Kassettenbodens installiert.

### Installation:

Extraktordurchmesser: 2000mm
Anzahl Kassettenböden: 9 Stück
Anzahl Kassettenelemenete pro Kassettenboden: 16 Stück
Granulatstrom: 2500 kg/h
Extraktionsflüssigkeitsstrom: 65 kg/h
Verweilzeit Granulat im Extraktor: ∼ 11h
Extraktgehalt im Granulat vor Extraktion: 9,2 %
Extraktgehalt der Extraktionsflüssigkeit vor Extraktion: ∼0,0 %
Temperatur Granulat im Zulauf: 98 °C

| | **Betrieb ohne Kassettenstrom** | **Betrieb mit Kassettenstrom Ohne Zwischenerhitzung** | **Betrieb mit Kassettenstrom Mit Zwischenerhitzung** |
|---|---|---|---|
| Zulauf Extraktionsflüssigkeit Kassettenböden | - | 95 °C | 95 °C |
| Ablauf Extraktionsflüssigkeit | 98 °C | 98 °C | 98 °C |
| Zulauf Extraktionsflüssigkeit Hauptextrakteur | 102 °C | 128 °C | 128 °C |
| Temperatur Granulatablauf | 102 °C | 121 °C | 125 °C |
| **Extraktgehalt Granulat nach Extraktion** | **0,4%** | **0,2%** | **0,13%** |

## Patentansprüche

1. Extraktionsreaktor zur Flüssigextraktion von granulärem Material umfassend mindestens ein vertikal verlaufendes Strömungsrohr (A), das eine Mehrzahl von horizontal ausgebildeten, den Querschnitt des Strömungsrohrs vollständig oder teilweise ausfüllende Wärmetauscherelemente (B), die von dem granulären Material und der Extraktionsflüssigkeit (11) durchströmt werden können, aufweist, wobei die Mehrzahl der Wärmetauscherelemente das Strömungsrohr (A) in einzelne vertikale Kompartimente (1, 2, 3, 4, 5) unterteilt, mindestens einen kopfseitigen Einlass (6) für das granuläre Material, mindestens einen bodenseitigen Auslass (7) für das granuläre Material, mindestens eine bodenseitige Zufuhr (8) für Extraktionsflüssigkeit (11) sowie mindestens einen kopfseitigen Auslass (16) für Extraktionsflüssigkeit (11), **dadurch gekennzeichnet, dass**
a/ mehrere Wärmetauscherelemente (B) zu Gruppen von Wärmetauscherelementen (B) arrangiert sind, indem für jede Gruppe die Wärmetauscherelemente (B) in Reihe nacheinander geschaltet beginnend mit dem vertikal obersten Wärmetauscherelement (B) jeder Gruppe von einem Medium zum Wärmetausch durchströmt werden,
oder
b/ die Mehrzahl von Wärmetauscherelementen (B) beginnend vom vertikal obersten Wärmetauscherelement (B) in Reihe nacheinander geschaltet von einem Medium zum Wärmetausch, das bevorzugt die Extraktionsflüssigkeit (11) ist, durchströmt wird, wobei nach Durchlauf des letzten Wärmetauschelements (B) das Medium zum Wärmetausch, bevorzugt die Extraktionsflüssigkeit (11), über die bodenseitige Zufuhr (8) in den Extraktionsreaktor eingeleitet wird.

2. Extraktionsreaktor nach Anspruch 1, **dadurch gekennzeichnet, dass** mindestens 2, bevorzugt mindestens 3, weiter bevorzugt 4 bis 30, insbesondere 8 bis 12 Wärmetauscherelemente (B) vorhanden sind.

3. Extraktionsreaktor nach einem der vorhergehenden Ansprüche, **dadurch gekennzeichnet, dass** die Wärmetauscherelemente (B) in vertikaler Richtung
a) äquidistant zueinander, und/oder
b) zueinander unterschiedlich beabstandet,
angeordnet sind.

4. Extraktionsreaktor nach einem der vorhergehenden Ansprüche, **dadurch gekennzeichnet, dass** die Wärmetauscherelemente (B) ausgewählt sind aus der Gruppe bestehend aus Kassettenböden, Einbautenböden, Rohrschlangenkonstruktionen sowie Kombinationen hieraus.

5. Extraktionsreaktor nach vorhergehendem Anspruch, **dadurch gekennzeichnet, dass** die Kassettenböden zwischen 9 und 96, bevorzugt zwischen 33 und 61 Einzelströmungselemente (100) umfassen, die jeweils einen separaten Raum (I) für granuläres Material und Extraktionsflüssigkeit (11) sowie einen verbundenen Raum (II) für ein Medium für den Wärmetausch aufweisen.

6. Extraktionsreaktor nach vorhergehendem Anspruch, **dadurch gekennzeichnet, dass** die Einzelströmungselemente (100) in Strömungsrichtung/vertikaler Richtung quadratischen oder hexagonalen Querschnitt aufweisen und eine konischen Granulatzulauf (101), einen Durchtrittstunnel (102) sowie einen konischen Granulatauslass (103) umfasst.

7. Extraktionsreaktor nach einem der vorhergehenden Ansprüche, **dadurch gekennzeichnet, dass** die Zufuhr (8) für Extraktionsflüssigkeit (11) einen Flüssigkeitsverteiler umfasst, mit dem die zugeführte Extraktionsflüssigkeit (11) über den gesamten Querschnitt des Strömungsrohr (A) verteilt werden kann.

8. Extraktionsreaktor nach einem der vorhergehenden Ansprüche, **dadurch gekennzeichnet, dass** zumindest einige oder alle der Kompartimente (1, 2, 3, 4, 5) einen Temperatursensor (T_{C}) zur Bestimmung der Temperatur des im jeweiligen Kompartiment (1, 2, 3, 4, 5) vorhandenen granulären Materials und/oder der Extraktionsflüssigkeit (11).

9. Extraktionsreaktor nach einem der vorhergehenden Ansprüche, **dadurch gekennzeichnet, dass** jedes Wärmetauscherelement (B)
a) einen separaten Zulauf (12, 13, 14, 15) für ein Medium für den Wärmetausch aufweist, der ein Regelventil (12a, 13a, 14a, 15a) aufweist, über das die durch das jeweilige Wärmetauscherelement (B) durchströmende Menge des Mediums für den Wärmetausch reguliert werden kann.
b) einen ersten separaten Zulauf (12, 13, 14, 15) für ein erstes Medium für den Wärmetausch sowie einen zweiten separaten Zulauf (22, 23, 24, 25) für ein zweites Medium für den Wärmetausch aufweist, wobei erstes und zweites Medium unterschiedlich temperiert sind, wobei jeweils erster und zweiter Zulauf (12-22, 13-23, 14-24, 15-25) paarweise über ein Dreiwegeventil (12b, 13b, 14b, 15b) mit jeweils einem Wärmetauschelement (B) verbunden sind, oder
c) einen separaten Kreislauf für ein Medium für den Wärmetausch mit Zirkulationspumpe und Wärmetauscher aufweist.

10. Extraktionsreaktor nach einem der vorhergehenden Ansprüche, **dadurch gekennzeichnet, dass** 2 bis 6, besonders bevorzugt 2 bis 3 Wärmetauscherelemente (B) zu Gruppen von Wärmetauscherelementen (B) arrangiert sind, indem für jede Gruppe die Wärmetauscherelemente (B) in Reihe nacheinander geschaltet beginnend mit dem vertikal obersten Wärmetauscherelement (B) jeder Gruppe von einem Medium zum Wärmetausch durchströmt werden.

11. Extraktionsreaktor nach einem der Ansprüche 1 bis 8, wobei die Wärmetauscherelemente (B) die Anordnung b/ des Anspruchs 1 aufweisen, **dadurch gekennzeichnet, dass** nach dem letzten Wärmetauscherelement und vor der bodenseiteigen Zufuhr (8) ein Wärmetauscher (E) zur Temperierung des Mediums zum Wärmetausch, bevorzugt der Extraktionsflüssigkeit (11) und/oder eine Pumpe (D) arrangiert ist.

12. Extraktionsreaktor nach einem der Ansprüche 1 bis 8 und 11, wobei die Wärmetauscherelemente (B) die Anordnung b/ des Anspruchs 1 aufweisen, **dadurch gekennzeichnet, dass** nach einem einzelnen oder jedem Wärmetauscherelement (B) ein Wärmetauscher (C) zur Temperierung des Mediums zum Wärmetausch, bevorzugt der Extraktionsflüssigkeit (11), vorhanden ist.

13. Verfahren zur Extraktion von in einer Extraktionsflüssigkeit (11) löslichen monomeren oder oligomeren Bestandteilen, bevorzugt ε-Caprolactam oder oligomeres Polyamid 6, aus einem granulärem Material, bevorzugt Polyamid 6-Granulat oder einem Granulat aus Copolymeren von Polyamid 6 mit einem Extraktionsreaktor nach einem der vorhergehenden Ansprüche, bei dem granuläres Material über den mindestens einen kopfseitigen Einlass (6) in das vertikal verlaufende Strömungsrohr (A) eingespeist und vertikal nach unten in Richtung des mindestens einen bodenseitigen Auslasses (7) geführt und dort dem Extraktionsreaktor entnommen wird, wobei eine Extraktionsflüssigkeit (11) über die mindestens eine bodenseitige Zufuhr (8) in das vertikal verlaufende Strömungsrohr (A) eingespeist und im Gegenstrom zum granulären Material in Richtung des mindestens einen kopfseitigen Auslasses (16) geführt und dort entnommen wird,
**dadurch gekennzeichnet,**
**dass** über die Mehrzahl der Wärmetauscherelemente (B) ein vertikaler Temperaturgradient im Strömungsrohr (A) erzeugt wird.

14. Verfahren nach vorhergehendem Anspruch, **dadurch gekennzeichnet, dass** über die Mehrzahl der Wärmetauscherelemente (B) in vertikaler Richtung von oben nach unten zunehmende Temperaturen im Strömungsrohr (A) eingestellt werden.

15. Verfahren nach einem der beiden vorhergehenden Ansprüche, **dadurch gekennzeichnet, dass** der Temperaturgradient so eingestellt wird, dass die maximale Temperatur der Extraktionsflüssigkeit (11) innerhalb des Strömungsrohres an jeder Stelle mindestens 0,5 °C bis 10 °C, bevorzugt 2 °C bis 7 °C unterhalb des Siedepunktes der Extraktionsflüssigkeit (11) beim gegebenen hydrostatischen Druck liegt.

16. Verfahren nach einem der Ansprüche 13 bis 15, **dadurch gekennzeichnet, dass** in mindestens einem Kompartiment (2, 3, 4, 5) des Strömungsrohrs, optional allen Kompartimenten (2, 3, 4, 5), eine maximale Extraktionstemperatur erreicht wird, die danach bis zum Austritt der Extraktionsflüssigkeit nicht mehr überschritten wird.

17. Verfahren nach einem der Ansprüche 13 bis 16, **dadurch gekennzeichnet, dass** der Druck innerhalb des Strömungsrohres zwischen 1,0 und 3,0 bar absolut, bevorzugt 1,0 und 2,0 bar absolut, beträgt.

18. Verfahren nach einem der Ansprüche 13 bis 17, **dadurch gekennzeichnet, dass** der Temperaturgradient dadurch eingestellt wird, dass jedes Wärmetauscherelement (B)
a) einen separaten Zulauf (12, 13, 14, 15) für ein Medium für den Wärmetausch aufweist, der ein Regelventil (12a, 13a, 14a, 15a) aufweist, über das die durch das jeweilige Wärmetauscherelement (B) durchströmende Menge des Mediums für den Wärmetausch reguliert werden kann, wobei jedes Wärmetauscherelement (B) mit einem gleich temperierten Medium für den Wärmetausch durchströmt wird und die Menge des Mediums pro Wärmetauscherelement (B) oder Gruppe von Wärmetauscherelementen (B) variiert wird,
b) einen ersten separaten Zulauf (12, 13, 14, 15) für ein erstes Medium für den Wärmetausch sowie einen zweiten separaten Zulauf (22, 23, 24, 25) für ein zweites Medium für den Wärmetausch aufweist, wobei erstes und zweites Medium unterschiedlich temperiert sind, wobei jeweils erster und zweiter Zulauf (12-22, 13-23, 14-24, 15-25) paarweise über ein Dreiwegeventil (12b, 13b, 14b, 15b) mit jeweils einem Wärmetauschelement (B) verbunden sind, wobei durch unterschiedliche Mischungsverhältnisse aus erstem und zweiten Medium für jedes Wärmetauscherelement (B) oder Gruppe von Wärmetauscherelementen (B) eine definierte Temperatur eingestellt wird, oder
c) einen separaten Kreislauf für ein Medium für den Wärmetausch mit Zirkulationspumpe und Wärmetauscher aufweist, wobei Temperatur und/oder Menge des Mediums für jedes Wärmetauscherelement oder Gruppe von Wärmetauscherelementen separat eingestellt wird.

19. Verfahren nach einem der Ansprüche 13 bis 18, **dadurch gekennzeichnet, dass** der Temperaturgradient dadurch eingestellt wird, dass die Mehrzahl von Wärmetauscherelementen (B) beginnend vom vertikal obersten Wärmetauscherelement (B) in Reihe nacheinander geschaltet von einem Medium zum Wärmetausch, das bevorzugt die Extraktionsflüssigkeit (11) ist, durchströmt wird, wobei nach Durchlauf des letzten Wärmetauschelements (B) das Medium zum Wärmetausch, bevorzugt die Extraktionsflüssigkeit (11), über die bodenseitige Zufuhr (8) in den Extraktionsreaktor eingeleitet wird und vor Einleiten mittels eines Wärmetauschers (E) auf eine vorbestimmte, an der bodenseitigen Zufuhr (8) herrschende Extraktionstemperatur erwärmt wird.

20. Verfahren nach einem der Ansprüche 13 bis 19, **dadurch gekennzeichnet, dass**
a) als Extraktionsflüssigkeit (11) Wasser oder eine Mischung aus Wasser und ε-Caprolactam
b) als Medium für den Wärmetausch Wasser, eine Mischung aus Wasser und einem mit Wasser mischbaren Alkohol oder eine Mischung aus Wasser und ε-Caprolactam
eingesetzt wird.

## Claims

1. Extraction reactor, in particular for liquid extraction from granular material, comprising at least one vertically extending flow pipe (A) which has a plurality of horizontally configured heat exchanger elements (B) which fill the cross-section of the flow pipe completely or partially and which can be flowed through by the granular material and the extraction liquid (11), the plurality of heat exchanger elements subdividing the flow pipe (A) into individual vertical compartments (1, 2, 3, 4, 5), at least one top-side inlet (6) for the granular material, at least one base-side outlet (7) for the granular material, at least one base-side supply (8) for extraction liquid (11) and also at least one top-side outlet (16) for extraction liquid (11),
**characterized in that**
a) a plurality of heat exchanger elements (B) are arranged to form groups of heat exchanger elements (B), wherein for each group the heat exchanger elements (B) connected successively in series are being flowed through, beginning with the vertically uppermost heat exchanger element (B) of each group, by a medium for the heat exchange
or
b) the plurality of heat exchanger elements (B), connected successively in series, is flowed through, beginning from the vertically uppermost heat exchanger element (B), by a medium for the heat exchange which is preferably the extraction liquid (11), the medium for the heat exchange, preferably the extraction liquid (11), being introduced into the extraction reactor via the base-side supply (8) after passing through the last heat exchanger element (B).

2. Extraction reactor according to claim 1, **characterised in that** at least 2, preferably at least 3, further preferred 4 to 30, in particular 8 to 12, heat exchanger elements (B) are present.

3. Extraction reactor according to one of the preceding claims, **characterised in that** the heat exchanger elements (B) are disposed in the vertical direction
a) equidistant from each other, and/or
b) at a different spacing from each other.

4. Extraction reactor according to one of the preceding claims, **characterised in that** the heat exchanger elements (B) are selected from the group consisting of cassette bases, baffle bases, pipe coil constructions and also combinations hereof.

5. Extraction reactor according to the preceding claim, **characterised in that** the cassette bases comprise between 9 and 96, preferably between 33 and 61, individual flow elements (100) which have respectively a separate space (I) for granular material and extraction liquid (11) and also a connected space (II) for a medium for the heat exchange.

6. Extraction reactor according to the preceding claim, **characterised in that** the individual flow elements (100) have a square or hexagonal cross-section in the flow direction/vertical direction and a conical granulate inflow (101), a through-tunnel (102) and also a conical granulate outlet (103).

7. Extraction reactor according to one of the preceding claims, **characterised in that** the supply (8) for extraction liquid (11) comprises a liquid distributor with which the supplied extraction liquid (11) can be distributed over the entire cross-section of the flow pipe (A).

8. Extraction reactor according to one of the preceding claims, **characterised in that** at least some or all of the compartments (1, 2, 3, 4, 5) have a temperature sensor (T_{C}) for determining the temperature of the granular material and/or of the extraction liquid (11) present in the respective compartment (1, 2, 3, 4, 5).

9. Extraction reactor according to one of the preceding claims, **characterised in that** each heat exchanger element (B)
a) has a separate inflow (12, 13, 14, 15) for a medium for the heat exchange, which has a control valve (12a, 13a, 14a, 15a) via which the quantity of medium for the heat exchange, which flows through the respective heat exchanger element (B), can be regulated.
b) has a first separate inflow (12, 13, 14, 15) for a first medium for the heat exchange and also a second separate inflow (22, 23, 24, 25) for a second medium for the heat exchange, first and second medium being temperature-controlled differently, respectively first and second inflow (12 - 22, 13 - 23, 14 - 24, 15 - 25) being connected in pairs to respectively one heat exchanger element (B) via a three-way valve (12b, 13b, 14b, 15b), or
c) has a separate circulation for a medium for the heat exchange with circulation pump and heat exchanger.

10. Extraction reactor according to one of the preceding claims, **characterised in that** 2 to 6, preferably 2 to 3 heat exchanger elements (B) are arranged to form groups of heat exchanger elements (B), wherein for each group the heat exchanger elements (B) connected successively in series are flowed through, beginning with the vertically uppermost heat exchanger element (B) of each group, by a medium for the heat exchange.

11. Extraction reactor according to one of the claims 1 to 8, wherein the heat exchanger elements (B) have the configuration according to embodiment b) of claim 1, **characterised in that**, after the last heat exchanger element and in front of the base-side supply (8), a heat exchanger (E) is arranged for temperature-control of the medium for the heat exchange, preferably the extraction liquid (11), and/or a pump (D).

12. Extraction reactor according to one of claims 1 to 8 and 11, wherein the heat exchanger elements (B) have the configuration according to embodiment b) of claim 1 **characterised in that**, after an individual or each heat exchanger element (B), a heat exchanger (C) is present for temperature-control of the medium for the heat exchange, preferably the extraction liquid (11).

13. Method for the extraction of monomeric or oligomeric components, which are soluble in an extraction liquid (11), preferably ε-caprolactam or oligomeric polyamide 6, from a granular material, preferably polyamide 6 granulate, or from a granulate of copolymers of polyamide 6 with an extraction reactor according to one of the preceding claims, in which granular material is fed into the vertically extending flow pipe (A) via the at least one top-side inlet (6) and is guided vertically downwards in the direction of the at least one base-side outlet (7) and is removed there from the extraction reactor,
an extraction liquid (11) being fed into the vertically extending flow pipe (A) via the at least one base-side supply (8) and being guided in counterflow to the granular material in the direction of the at least one top-side outlet (16) and being removed there,
***characterised in that***
a vertical temperature gradient is produced in the flow pipe (A) via the plurality of heat exchanger elements (B).

14. Method according to the preceding claim, **characterised in that** temperatures in the flow pipe (A) increasing, in the vertical direction, from the top to the bottom are set via the plurality of heat exchanger elements (B).

15. Method according to one of the two preceding claims, **characterised in that** the temperature gradient is set such that the maximum temperature of the extraction liquid (11) inside the flow pipe is, at any point, at least 0.5°C to 10°C, preferably 2°C to 7°C, below the boiling point of the extraction liquid (11) at the given hydrostatic pressure.

16. Method according to one of the claims 13 to 15, **characterised in that**, in at least one compartment (2, 3, 4, 5) of the flow pipe, optionally in all the compartments (2, 3, 4, 5), a maximum extraction temperature is reached, which is no longer exceeded thereafter until discharge of the extraction liquid.

17. Method according to one of the claims 13 to 16, **characterised in that** the pressure inside the flow pipe is between 1.0 and 3.0 bar absolute, preferably 1.0 and 2.0 bar absolute.

18. Method according to one of the claims 13 to 17, **characterised in that** the temperature gradient is set by each heat exchanger element (B)
a) having a separate inflow (12, 13, 14, 15) for a medium for the heat exchange which has a control valve (12a, 13a, 14a, 15a) via which the quantity of medium for the heat exchange, which flows through the respective heat exchanger element (B), can be regulated, each heat exchanger element (B) being flowed through by an equally temperature-controlled medium for the heat exchange and the quantity of medium being varied per heat exchanger element (B) or group of heat exchanger elements (B),
b) having a first separate inflow (12, 13, 14, 15) for a first medium for the heat exchange and also a second separate inflow (22, 23, 24, 25) for a second medium for the heat exchange, first and second medium being temperature-controlled differently, respectively first and second inflow (12 - 22, 13 - 23, 14 - 24, 15 - 25) being connected in pairs to respectively one heat exchanger element (B) via a three-way valve (12b, 13b, 14b, 15b), a defined temperature being set by different mixing ratios of the first and second medium for each heat exchanger element (B) or group of heat exchanger elements (B), or
c) having a separate circulation for a medium for the heat exchange with circulation pump and heat exchanger, temperature and/or quantity of the medium being set separately for each heat exchanger element or group of heat exchanger elements.

19. Method according to one of the claims 13 to 18, **characterised in that** the temperature gradient is set by the plurality of heat exchanger elements (B), connected successively in series, being flowed through, beginning from the vertically uppermost heat exchanger element (B), by a medium for the heat exchange which is preferably the extraction liquid (11), the medium for the heat exchange, preferably the extraction liquid (11), being introduced into the extraction reactor via the base-side supply (8) after passing through the last heat exchanger element (B) and being heated, before introduction, to a predetermined extraction temperature prevailing at the base-side supply (8) by means of a heat exchanger (E).

20. Method according to one of the claims 13 to 19, **characterised in that** there is used
a) as extraction liquid (11), water or a mixture of water and ε-caprolactam
b) as medium for the heat exchange, water, a mixture of water and an alcohol which is miscible with water or a mixture of water and ε-caprolactam.

## Revendications

1. Réacteur d'extraction pour l'extraction liquide d'un matériau granulaire comprenant au moins un tube d'écoulement (A) s'étendant verticalement, qui comprend une pluralité d'éléments d'échange thermique (B) horizontaux remplissant entièrement ou partiellement la section transversale du tube d'écoulement, qui peuvent être traversés par le matériau granulaire et le liquide d'extraction (11), la pluralité d'éléments d'échange thermique divisant le tube d'écoulement (A) en compartiments verticaux individuels (1, 2, 3, 4, 5), au moins une entrée côté supérieur (6) pour le matériau granulaire, au moins une sortie côté inférieur (7) pour le matériau granulaire, au moins une alimentation côté inférieur (8) pour le liquide d'extraction (11) ainsi qu'au moins une sortie côté supérieur (16) pour le liquide d'extraction (11),
**caractérisé en ce que**
a/ plusieurs éléments d'échange thermique (B) sont disposés en groupes d'éléments d'échange thermique (B), les éléments d'échange thermique (B) étant branchés en série les uns derrière les autres pour chaque groupe, en commençant par l'élément d'échange thermique (B) verticalement le plus haut de chaque groupe, et traversés par un fluide d'échange thermique,
ou
b/ la pluralité d'éléments d'échange thermique (B), branchés en série les uns derrière les autres en commençant par l'élément d'échange thermique (B) verticalement le plus haut, sont traversés par un fluide d'échange thermique, qui est de préférence de liquide d'extraction (11), moyennant quoi, après avoir traversé le dernier élément d'échange thermique (B), le fluide d'échange thermique, de préférence le liquide d'extraction (11), est introduit dans le réacteur d'extraction par l'intermédiaire de l'alimentation côté inférieur (8).

2. Réacteur d'extraction selon la revendication 1, **caractérisé en ce qu'**au moins 2, de préférence au moins 3, de préférence de 4 à 30, plus particulièrement de 8 à 12 éléments d'échange thermique (B) sont présents.

3. Réacteur d'extraction selon l'une des revendications précédentes, **caractérisé en ce que** les éléments d'échange thermique (B) sont disposés, dans la direction verticale,
a) de manière équidistante entre eux et/ou
b) avec des distances différentes entre eux.

4. Réacteur d'extraction selon l'une des revendications précédentes, **caractérisé en ce que** les éléments d'échange thermique (B) sont sélectionnés dans le groupe constitué de fonds de caissons, de fonds de structures, de constructions à serpentins tubulaires ainsi que de combinaison de ceux-ci.

5. Réacteur d'extraction selon la revendication précédente, **caractérisé en ce que** les fonds de caissons comprennent entre 9 et 96, de préférence entre 33 et 61 éléments d'écoulement individuels (100) qui comprennent chacun un espace séparé (I) pour le matériau granulaire et le liquide d'extraction (11) ainsi qu'un espace relié (II) pour un fluide d'échange thermique.

6. Réacteur d'extraction selon la revendication précédente, **caractérisé en ce que** les éléments d'écoulement individuels (100) présentent, dans la direction d'écoulement / dans la direction verticale, une section transversale carrée ou hexagonale et une entrée de granulat conique (101), un tunnel de passage (102) ainsi qu'une sortie de granulat conique (103).

7. Réacteur d'extraction selon l'une des revendications précédentes, **caractérisé en ce que** l'alimentation (8) en liquide d'extraction (11) comprend un répartiteur de liquide avec lequel le liquide d'extraction (11) introduit peut être réparti sur l'ensemble de la section transversale du tube d'écoulement (A).

8. Réacteur d'extraction selon l'une des revendications précédentes, **caractérisé en ce qu'**au moins certains ou tous les compartiments (1, 2, 3, 4, 5) comprennent un capteur de température (T_{C}) pour la détermination de la température du matériau granulaire et/ou du liquide d'extraction (11) se trouvant dans le compartiment (1, 2, 3, 4, 5) correspondant.

9. Réacteur d'extraction selon l'une des revendications précédentes, **caractérisé en ce que** chaque élément d'échange thermique (B) comprend
a) une entrée séparée (12, 13, 14, 15) pour un fluide d'échange thermique, qui comprend une soupape de régulation (12a, 13a, 14a, 15a) par l'intermédiaire de laquelle la quantité de fluide d'échange thermique traversant l'élément d'échange thermique (B) correspondant peut être régulée,
b) une première entrée séparée (12, 13, 14, 15) pour un premier fluide d'échange thermique ainsi qu'une deuxième entrée séparée (22, 23, 24, 25) pour un deuxième fluide d'échange thermique, les premier et deuxième fluides étant régulés à des températures différentes, les première et deuxième entrées (12-22, 13,-23, 14-24, 15-25) étant reliées par paires par l'intermédiaire d'une soupape à trois voies (12b, 13b, 14b, 15b) chacune avec un élément d'échange thermique (B) ou
c) un circuit séparé pour un fluide d'échange thermique avec une pompe de circulation et un échangeur thermique.

10. Réacteur d'extraction selon l'une des revendications précédentes, **caractérisé en ce que** 2 à 6, plus particulièrement de préférence de 2 à 3 éléments d'échange thermique (B) sont disposés en groupes d'éléments d'échange thermique (B), les éléments d'échange thermique (B) étant branchés en série les uns derrière les autres pour chaque groupe, en commençant par l'élément d'échange thermique (B) verticalement le plus haut de chaque groupe, et traversés par un fluide d'échange thermique.

11. Réacteur d'extraction selon l'une des revendications 1 à 8, les éléments d'échange thermique (B) présentant la disposition b/ de la revendication 1, **caractérisé en ce que**, après le dernier élément d'échange thermique et avant l'alimentation côté inférieur (8), est disposé(e) un échangeur thermique (E), pour la régulation de la température du fluide d'échange thermique, de préférence du liquide d'extraction (11), et/ou une pompe (D).

12. Réacteur d'extraction selon l'une des revendications 1 à 8 et 11, les éléments d'échange thermique (B) présentant la disposition b/ de la revendication 1, **caractérisé en ce que**, après certains ou chacun des éléments d'échange thermique (B), est disposé un échangeur thermique (C) pour la régulation de la température du fluide d'échange thermique, de préférence du liquide d'extraction (11).

13. Procédé d'extraction de composants monomères ou oligomères solubles dans un liquide d'extraction (11), de préférence du ε-caprolactame ou un polyamide 6 oligomère, à partir d'un matériau granulaire, de préférence un granulat de polyamide 6 ou un granulat constitué de copolymères de polyamide 6, avec un réacteur d'extraction selon l'une des revendications précédentes, dans lequel
un matériau granulaire est introduit, par l'intermédiaire de l'au moins une entrée côté supérieur (6), dans le tube d'écoulement (A) s'étendant verticalement et est guidé verticalement vers le bas en direction de l'au moins une sortie côté inférieur (7) et est alors évacué du réacteur d'extraction, un liquide d'extraction (11) étant introduit par l'intermédiaire de l'au moins une alimentation côté inférieur (8) dans le tube d'écoulement (A) s'étendant verticalement et étant guidé à contre-courant par rapport au matériau granulaire en direction de l'au moins une sortie côté supérieur (16) et étant évacué au niveau de celle-ci,
**caractérisé en ce que**
un gradient de température vertical est généré dans le tube d'écoulement (A) grâce à la pluralité d'éléments d'échange thermique (B).

14. Procédé selon la revendication précédente, **caractérisé en ce qu'**une température croissante en direction verticale du haut vers le bas est réglée dans le tube d'écoulement (A) grâce à la pluralité d'éléments d'échange thermique (B).

15. Procédé selon l'une des deux revendications précédentes, **caractérisé en ce que** le gradient de température est réglé de façon à ce que la température maximale du liquide d'extraction (11) à un endroit quelconque à l'intérieur du tube d'écoulement se trouve d'au moins 0,5 °C à 10 °C, de préférence de 2 °C à 7 °C en dessous du point d'ébullition du liquide d'extraction (11) pour une pression hydrostatique donnée.

16. Procédé selon l'une des revendications 13 à 15, **caractérisé en ce que**, dans au moins un compartiment (2, 3, 4, 5) du tube d'écoulement, en option dans tous les compartiments (2, 3, 4, 5), une température d'extraction maximale est atteinte, qui n'est ensuite plus dépassée jusqu'à la sortie du liquide d'extraction.

17. Procédé selon l'une des revendications 13 à 16, **caractérisé en ce que** la pression à l'intérieur du tube d'écoulement est entre 1,0 et 3,0 bar absolus, de préférence entre 1,0 et 2,0 bar absolus.

18. Procédé selon l'une des revendications 13 à 17, **caractérisé en ce que** le gradient de température est réglé grâce au fait que chaque élément d'échange thermique (B) comprend
a) une entrée séparée (12, 13, 14, 15) pour un fluide d'échange thermique, qui comprend une soupape de régulation (12a, 13a, 14a, 15a) par l'intermédiaire de laquelle la quantité de fluide d'échange thermique traversant l'élément d'échange thermique (B) correspondant peut être régulée, chaque élément d'échange thermique (B) étant traversé par un fluide d'échange thermique de même température et la quantité de fluide par élément d'échange thermique (B) ou par groupe d'éléments d'échange thermique (B) étant variable,
b) une première entrée séparée (12, 13, 14, 15) pour un premier fluide d'échange thermique ainsi qu'une deuxième entrée séparée (22, 23, 24, 25) pour un deuxième fluide d'échange thermique, les premier et deuxième fluides étant régulés à des températures différentes, les première et deuxième entrées (12-22, 13,-23, 14-24, 15-25) étant reliées par paires par l'intermédiaire d'une soupape à trois voies (12b, 13b, 14b, 15b) chacune avec un élément d'échange thermique (B), des rapports de mélanges différents entre les premier et deuxième fluides permettant de régler une température définie pour chaque élément d'échange thermique (B) ou chaque groupe d'éléments d'échange thermique (B) ou
c) un circuit séparé pour un fluide d'échange thermique avec une pompe de circulation et un échangeur thermique, la température et/ou la quantité de fluide thermique (B) étant réglée séparément pour chaque élément d'échange thermique (B) ou chaque groupe d'éléments d'échange.

19. Procédé selon l'une des revendications 13 à 18, **caractérisé en ce que** le gradient de température est réglé grâce au fait que la pluralité d'éléments d'échange thermique (B), branchés en série les uns après les autres en commençant par l'élément d'échange thermique (B) verticalement le plus haut, sont traversés par un fluide d'échange thermique, qui est de préférence le liquide d'extraction (11), moyennant quoi, après avoir traversé le dernier élément d'échange thermique (B), le fluide d'échange thermique, de préférence le liquide d'extraction (11), est introduit par l'intermédiaire de l'alimentation côté inférieur (8) dans le réacteur d'extraction et est chauffé, avant l'introduction, au moyen d'un échangeur thermique (E), à la température d'extraction prédéterminée régnant au niveau de l'alimentation côté inférieur (8).

20. Procédé selon l'une des revendications 13 à 19, **caractérisé en ce que**
a) le liquide d'extraction (11) utilisé est de l'eau ou un mélange d'eau et de ε-caprolactame,
b) le fluide d'échange thermique utilisé est de l'eau, un mélange d'eau et d'un alcool miscible avec de l'eau ou un mélange d'eau et de ε-caprolactame.
